# EUROPÄISCHE PATENTSCHRIFT

(11) **EP 1 325 068 B1**
(45) Veröffentlichungstag und Bekanntmachung des Hinweises auf die Patenterteilung: **22.02.2006**
(21) Anmeldenummer: 01974307.9
(22) Anmeldetag: 27.09.2001
(51) Int. Cl.: C08K 5/103, C04B 24/26

(54) **REDISPERGIERBARE DISPERSIONSPULVER-ZUSAMMENSETZUNG, VERFAHREN ZU DEREN HERSTELLUNG SOWIE DEREN VERWENDUNG**
REDISPERSIBLE DISPERSION POWDER COMPOSITION, METHOD FOR THE PRODUCTION AND USE THEREOF
COMPOSITION DE POUDRE DE DISPERSION REDISPERSIBLE, SON PROCEDE DE PRODUCTION ET SON UTILISATION

(30) Priorität: 02.10.2000 DE 10049127
(43) Veröffentlichungstag der Anmeldung: 09.07.2003
(73) Patentinhaber: Celanese Emulsions GmbH, 61476 Kronberg/Ts. (DE)
(72) Erfinder: FIEDLER, Wolfgang, 65817 Eppstein (DE); GEISSLER, Ulrich, 65239 Hochheim (DE); SCHMITZ, Ludwig, 68642 Bürstadt (DE)
(74) Vertreter: Ackermann, Joachim
(86) Internationale Anmeldenummer: PCT/EP2001/011191
(87) Internationale Veröffentlichungsnummer: WO 2002/031036

(56) Entgegenhaltungen:
- EP-A- 0 731 128
- WO-A-98/31643

## Beschreibung

Die vorliegende Erfindung betrifft eine in Wasser redispergierbare Dispersionspulver-Zusammensetzung auf der Basis von wasserunlöslichen Polymerisaten, Verfahren zu deren Herstellung sowie deren Verwendung, insbesondere in Baustoffen, um deren Wasseraufnahme zu reduzieren.

In Wasser redispergierbare Dispersionspulver-Zusammensetzungen auf der Basis von Homo- und Copolymerisaten sind bekannt. Die Herstellung derartiger Dispersionspulver-Zusammensetzungen erfolgt durch Sprühtrocknung der entsprechenden wässrigen Kunststoffdispersionen in einem heißen Luftstrom. Die Dispersionspulver eignen sich als Zusatzstoffe für hydraulische Bindemittel in der Baustoffindustrie. Des weiteren werden derartige Produkte als Bindemittel in Beschichtungsmitteln oder Klebemitteln eingesetzt.

Der Zusatz von Additiven bei der Herstellung von Baustoffen ist seit langem bekannt. So werden z.B. in WO 98/31643 stabile Polymer-Emulsionen auf Acrylat-Kammpolymerbasis als Zementzusatz offenbart. Weiterhin ist aus EP 0 731 128 bereits die Modifizierung von Zement-Formulierungen aus einem wasserunlöslichen Polymerisat und Carbonssäureestern bekannt. Aus WO 98/31643 und EP 0 731 128 ist allerdings kein Hinweis über eine Verwendung zum Hydrophobieren von Baustoffmassen zu entnehmen. In der EP-A-0 741 760 werden in Wasser redispergierbare Dispersionspulver auf der Basis von filmbildenden, wasserunlöslichen Vinyl- und/oder Acrylpolymerisaten beschrieben, welche organische Siliciumverbindungen, insbesondere Organoorganoxysilane als Hydrophobierungsmittel enthalten. Die Herstellung dieser Pulver erfolgt durch Sprühtrocknung der wässrigen Gemische von wässrigen Dispersionen der Vinyl- und/oder Acrylpolymerisate, denen vor dem Versprühen die organischen Siliciumverbindungen zugesetzt werden. Nachteilig beim Einsatz siliciumorganischer Verbindungen ist deren schlechte biologische Abbaubarkeit und deren ungünstige Ökobilanz bei der Herstellung, welche die Umwelt stark belastet.

Der vorliegenden Erfindung lag somit die Aufgabe zugrunde, in Wasser redispergierbare Dispersionspulver-Zusammensetzungen auf der Basis wasserunlöslicher Polymerer zur Verfügung zu stellen, die nicht die oben genannten Nachteile aufweisen und dennoch hydrophobierend in Baustoffmassen wirken.

Gegenstand der vorliegenden Erfindung ist somit die Verwendung einer in Wasser redispergierbare Dispersionspulver-Zusammensetzung auf der Basis von wasserunlöslichen Polymerisaten, die dadurch gekennzeichnet ist, dass sie, bezogen auf die Gesamtmasse des Polymerisats, 0,1 bis 30 Gew.-% mindestens eines Carbonsäureesters enthält, dessen Alkoholkomponente aus der Gruppe der Polyhydroxyverbindungen stammt, zur Hydrophobierung von Baustoffmassen.

Bevorzugt ist eine Dispersionspulver-Zusammensetzung, enthaltend
a) mindestens ein wasserunlösliches Polymerisat aus der Gruppe der Vinylester-, Vinylester/Ethylen-, Vinylchlorid-, (Meth)acrylat-, Styrol/(Meth)acrylat-Homo- und/oder Copolymerisate,
b) 0 bis 35 Gew.-%, vorzugsweise 3 bis 15 Gew.-%, bezogen auf die Gesamtmasse des Polymerisats, mindestens eines Schutzkolloids,
c) 0,1 bis 30 Gew.%, vorzugsweise 0,5 bis 10 Gew.%, bezogen auf die Gesamtmasse des Polymerisats, mindestens eines Carbonsäureesters, dessen Alkoholkomponente aus der Gruppe der Polyhydroxyverbindungen stammt, und der zwischen Carbonsäure und Alkoholkomponente zwischen 0 und 80 Polyethylenoxideinheiten aufweist und
d) 0 bis 30 Gew.-%, vorzugsweise 1 bis 20 Gew.-%, bezogen auf die Gesamtmasse des Polymerisats, Antibackmittel.

Als wasserunlösliche Polymerisate eignen sich Homo- und Copolymerisate, die in Form einer wässrigen Dispersion vorliegen oder die sich in eine wässrige Dispersion überführen lassen und welche, gegebenenfalls bei erhöhter Temperatur und/oder im alkalischen Medium, nach dem Auftrocknen und gegebenenfalls Aushärten einen festen Film bilden. Die mittlere Korngröße des Pulvers beträgt vorzugsweise 1 bis 1000 µm, besonders bevorzugt 10 bis 700 µm, und insbesondere 50 bis 500 µm.

Bevorzugte wasserunlösliche Polymerisate sind:
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und Ethen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und (Meth)acrylsäureester;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen, (Meth)acrylsäureester und Ethen;
- (Meth)acrylsäureester-Homo- und -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen;
- (Meth)acrylsäureester-Homo- und -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen und Styrol;
- Homo- und Copolymerisate von Fumar- und/oder Maleinsäure-mono- oder
- diestem von unverzweigten oder verzweigten Alkoholen mit 1 bis 12 C-Atomen;
- Homo- und Copolymerisate von Dienen wie Butadien oder Isopren, sowie von Olefinen, wie Ethen oder Propen, wobei die Diene beispielsweise mit Styrol, (Meth)acrylsäureestern oder den Estern der Fumar- und/oder Maleinsäure copolymerisiert werden können;
- Homo- und Copolymerisate von Vinylaromaten, wie z.B. Styrol, Methylstyrol und Vinyltoluol;
- Homo- und Copolymerisate von Vinylhalogenverbindungen, wie z.B. Vinylchlorid.

Ebenfalls geeignet sind auch wasserunlösliche, filmbildende Polyadditions- und Polykondensationspolymere, wie z.B. Polyurethane, Polyester, Polyether, Polyamide, Melaminformaldehydharze und Phenolformaldehydharze, gegebenenfalls auch in Form ihrer oligomeren Vorprodukte.

Als Vinylester bevorzugt sind Vinylacetat, Vinylpropionat, Vinylbutyrat, Vinyl-2-ethylhexanoat, Vinyllaurat, 1-Methylvinylacetat, Vinylpivalat und Vinylester von α,α-Dialkyl-verzweigten Monocarbonsäuren mit bis zu 15 C-Atomen, beispielsweise VeoVa9®, VeoVa10® oder VeoVa11®. Besonders bevorzugt ist Vinylacetat und VeoVa10®.

Als Methacrylsäureester oder Acrylsäureester bevorzugt sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat und 2-Ethylhexylacrylat. Besonders bevorzugt sind Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl- und Dodecylgruppe.

Die Vinylester-Copolymerisate können 1,0 bis 65 Gew.-%, bezogen auf das Gesamtgewicht der Comonomerphase, α-Olefine, wie Ethen und Propen, und/oder Vinylaromaten, wie Styrol, und/oder Vinylhalogenide, wie Vinylchlorid, und/oder Acrylsäureester bzw. Methacrylsäureester von Alkoholen mit 1 bis 12 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat und 2-Ethylhexylacrylat, und/oder ethylenisch ungesättigte Dicarbonsäuren bzw. deren Derivate, wie Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

Die (Meth)acrylsäureester-Copolymerisate können 1,0 bis 65 Gew.-%, bezogen auf das Gesamtgewicht der Monomerphase, α-Olefine, wie Ethen und Propen, und/oder Vinylaromaten, wie Styrol, und/oder Vinylhalogenide, wie Vinylchlorid, und/oder ethylenisch ungesättigte Dicarbonsäuren bzw. deren Derivate, wie Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

In einer weiteren Ausführungsform können die Vinylester-Copolymerisate und (Meth)acrylsäureester-Copolymerisate noch 0,05 bis 10,0 Gew.-%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure und 2-Acrylamido-2-methylpropansulfonsäure (AMPS), und/oder aus der Gruppe der mehrfach ethylenisch ungesättigten Comonomeren, beispielsweise Divinyladipat, Diallylmaleat, Allylmethacrylat oder Triallylcyanurat, enthalten. Als Hilfsmonomere geeignet sind auch vernetzend wirkende Comonomere, beispielsweise Acrylamidoglykolsäure (AGA), Methacrylamidoglykolsäuremethylester (MAGME), N-Methylolacrylamid (NMAA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats. Entsprechendes gilt für die Copolymerisate der Ester der Malein- oder Fumarsäure.

Die Herstellung der genannten, radikalisch polymerisierbaren, wasserunlöslichen Polymerisate erfolgt vorzugsweise durch Emulsionspolymerisation. Die Polymerisation kann dabei diskontinuierlich oder kontinuierlich, mit oder ohne Verwendung von Saatlatices, unter Vorlage aller oder einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C durchgeführt und mit den für die Emulsionspolymerisation üblicherweise eingesetzten Methoden eingeleitet. Die Initiierung erfolgt üblicherweise mittels der üblichen wasserlöslichen Radikalbildner, die vorzugsweise in Mengen von 0,01 bis 3,0 Gew.-%, bezogen auf das Gesamtgewicht der Monomeren eingesetzt werden. Geeignete wasserlösliche Initiatoren sind beispielsweise Natrium-, Kalium- oder Ammoniumperoxodisulfat sowie wasserlösliche Azoinitiatoren, wie zum Beispiel 2,2'-azobis(2-amidino propan)dihydrochlorid. Geeignete monomerlösliche Initiatoren sind organische Hydroperoxide, wie z.B. tert-butyl Hydroperoxid und Cumen-Hydroperoxid, organische Peroxide, wie z.B. Dibenzoylperoxid und Dilaurylperoxid, und monomerlösliche Azoverbindungen, wie z.B. Azobisisobutyronitril. Die Initiatoren können zusammen mit Substanzen eingesetzt werden, die eine reduzierende Wirkung haben, wie zum Beispiel Natriumbisulfit und Natriumhydroxymethansulfinat. Als Dispergiermittel können alle üblicherweise bei der Emulsionspolymerisation verwendeten Emulgatoren und/oder Schutzkolloide eingesetzt werden.

Gegebenenfalls werden bis zu 6 Gew.-%, bezogen auf das Gesamtgewicht der Monomeren, an Emulgatoren eingesetzt. Als Emulgatoren kommen hierbei sowohl anionische, kationische als auch nichtionische Emulgatoren in Betracht, soweit diese nicht im Schutzkolloid löslich sind.

Vorzugsweise werden Schutzkolloide, besonders bevorzugt in Mengen bis 15 Gew.-%, bezogen auf das Gesamtgewicht der Monomeren, eingesetzt. Geeignete Schutzkolloide sind beispielsweise Polyvinylalkohole und deren Derivate wie Vinylalkohol/Vinylacetat-Copolymere, Polyvinylpyrrolidone, Polysaccharide, wie Stärken (Amylose und Amylopektin), Cellulose, Guar, Tragacantinsäure, Dextran, Alginate und deren Carboxymethyl-, Methyl-, Hydroxyethyl-, Hydroxypropyl-Derivate, Proteine wie Casein, Sojaprotein, Gelatine, synthetische Polymere wie Poly(meth)acrylsäure, Poly(meth)acrylamid, Polyvinylsulfonsäuren und deren wasserlöslichen Copolymere, Melaminformaldehydsulfonate, Naphthalinformaldehydsulfonate, StyrollMaleinsäure- und Vinylether/Maleinsäure-Copolymere. In einer besonders bevorzugten Ausführungsform wird die Polymerisation mit Polyvinylalkohol als Schutzkolloid durchgeführt. Besonders bevorzugt sind dabei Polyvinylalkohole mit einem Polymerisationsgrad von 200 bis 3500 und einem Hydrolysegrad von 80 bis 98 Mol-%.

Als Polyhydroxyverbindungen werden definitionsgemäß alle nieder- und makromolekularen organischen Verbindungen, die zwei und mehr HydroxyGruppen im Molekül enthalten (Römpp Lexikon Chemie - Version 2.0, Stuttgart/New York: Georg Thieme Verlag 1999) bezeichnet. Zu den auch Polyole genannten Polyhydroxyverbindungen gehören definitionsgemäß mehrwertige Alkohole, wie Glycerin und Pentaerythrit, Phenole, wie Polyphenole, Zuckeralkohole, Kohlehydrate, natürliche Polymere, wie Polysaccharide, Cellulose und Stärke, und synthetische Polymere, wie Polyvinylalkohol.

Als bevorzugte Polyhydroxykomponente der Carbonsäureester werden Glycerin, Diglycerin, Polyglycerin, Erythrit, Pentaerythrit, Xylit, Sorbit, Sorbitane, Mannit, Sucrose und weitere Glykoside eingesetzt. Besonders bevorzugt sind Ester des Sorbits, der Sorbitane, des Glycerins und des Diglycerins. Insbesondere bevorzugt sind Ester der Sorbitane und des Glycerins.

Sowohl die Säure- als auch die Alkoholkomponente der Carbonsäureester können entweder gesättigt oder ungesättigt sowie unverzweigt oder verzweigt sein. Der Säure- und der Alkoholrest kann auch Halogene wie Fluor oder Chlor, sowie Ether-, Thioether-, Ester-, Amid-, Carboxyl-, Sulfonsäure-, Carbonsäureanhydrid- und Carbonylgruppen enthalten, der Säurerest zusätzlich Hydroxylgruppen.

Die Polyhydroxyverbindungen können an jeder Hydroxylgruppe verestert sein, so dass neben den Monoestern auch die Di-, Tri- und Polyester eingesetzt werden können. Bevorzugt eingesetzt werden jedoch die Monoester.

Zur Verbesserung der Wasserlöslichkeit können die Carbonsäureester Polyethylenoxideinheiten als Spacer zwischen Carbonsäure- und Alkoholkomponente enthalten. Die Anzahl der Polyethylenoxideinheiten liegt im allgemeinen zwischen 1 und 80, vorzugsweise zwischen 2 und 40.

Im Falle einer genügenden Wasserlöslichkeit werden die Polyhydroxycarbonsäureester bevorzugt als Reinsubstanz zum Emulsionspolymerisat zugegeben. Andernfalls werden die Carbonsäureester in Form einer Emulsion zugegeben. Zur Emulgierung verwendet man vorzugsweise Schutzkolloide, gegebenenfalls in Kombination mit geeigneten Emulgatoren. Als Emulgatoren kommen hierbei sowohl anionische, kationische als auch nichtionische Emulgatoren in Betracht.

Weiterhin bevorzugt ist die Zugabe der Carbonsäureester zur wässrigen Phase der Emulsionspolymerisation. Des weiteren können die beanspruchten Carbonsäureester während der Emulsionspolymerisation zudosiert werden.

In einer weiteren Ausführungsform werden die Carbonsäureester auf einen festen Träger aufgebracht, wie dies in der DE-A-195 35 833 und der DE-A-197 52 659 ausführlich beschrieben wird. Bei diesen Trägem handelt es sich dabei um Antibackmittel, sowie Magnesiumhydrosilicate, feinteiliges Titandioxid, Tonerden, Bleicherden, aktiviertes Aluminiumoxid, Vermiculite wie Bentonit, expandiertes Perlit, sowie Phosphate wie Na-Phosphat. Besonders bevorzugt sind Kieselsäuren mit einer BET-Oberfläche von mindestens 50 m²/g, insbesondere von mindestens 100 m²/g. Die Menge an zugesetztem Carbonsäureester beträgt zwischen 10 und 160 Gew.-%, bezogen auf das Gewicht der eingesetzten Trägersubstanz.

Diese gecoateten Produkte werden entweder als Antibackmittel eingesetzt und während des Versprühprozesses zugemischt oder zum fertigen Dispersionspulver zugegeben.

In einer bevorzugten Ausführungsform enthält die Dispersionspulver-Zusammensetzung 0 bis 35 Gew.-%, besonders bevorzugt 3 bis 15 Gew.-%, Schutzkolloid, bezogen auf die Gesamtmenge an wasserunlöslichem Polymerisat. Geeignete Schutzkolloide sind beispielsweise Polyvinylalkohole und deren Derivate wie Vinylalkohol/Vinylacetat-Copolymere, Polyvinylpyrrolidone, Polysaccharide, wie Stärken (Amylose und Amylopektin), Cellulose, Guar, Tragacantinsäure, Dextran, Alginate und Carboxymethyl-, Methyl-, Hydroxyethyl-, Hydroxypropyl-Derivate, Proteine wie Casein, Sojaprotein, Gelatine, synthetische Polymere wie Poly(meth)acrylsäure, Poly(meth)acrylamid, Polyvinylsulfonsäuren und deren wasserlöslichen Copolymere, Melaminformaldehydsulfonate, Naphthalinformaldehydsulfonate, Styrolmaleinsäure- und Vinylethermaleinsäure-Copolymere.

Geeignete Antibackmittel sind vorzugsweise Aluminiumsilikate, Calcium- und Magnesiumcarbonate bzw. deren Gemische, Kieselsäuren oder Kombinationen von Dolomit bzw. Calcit und Talk. Die Antibackmittel besitzen vorzugsweise eine Teilchengröße von 0,001 bis 0,5 mm.

Die Herstellung der Dispersionspulver-Zusammensetzung erfolgt über Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 50 bis 100°C, vorzugsweise 60 bis 90°C, je nach Anlage, Glastemperatur des Harzes und gewünschtem Trocknungsgrad, gewählt. Zur Erhöhung der Lagerstabilität und der Rieselfähigkeit des Dispersionspulvers wird vorzugsweise ein Antibackmittel parallel zur Dispersion in den Sprühturm eingebracht, so dass es zu einer bevorzugten Ablagerung des Antibackmittels auf den Dispersionsteilchen kommt.

Die Dispersionspulver-Zusammensetzung kann in den typischen Anwendungsgebieten eingesetzt werden. Beispielsweise in bauchemischen Produkten in Verbindung mit anorganischen, hydraulisch abbindenden Bindemitteln wie Zementen (Portland-, Aluminat-, Trass-, Hüllen-, Magnesia- und Phosphatzement), Gips, Wasserglas, für die Herstellung von Bauklebem, Putzen, Spachtelmassen, Fußbodenspachtelmassen, Fugenmörteln und Farben. Ferner als Alleinbindemittel für Beschichtungsmittel und Klebemittel oder als Bindemittel für Textilien. Vorzugsweise wird die Dispersionspulver-Zusammensetzung als hydrophobierendes Bindemittel in Anwendungsgebieten eingesetzt, in denen neben einer guten Haftung auch eine reduzierte Wasseraufnahme und/oder ein wasserabweisender Effekt erwünscht ist.

Die Erfindung wird im folgenden anhand von Ausführungsbeispielen näher beschrieben, ohne dadurch jedoch beschränkt zu werden. Die in den Beispielen angeführten Teile und Prozente beziehen sich auf das Gewicht, soweit nicht anders angegeben.

### Beispiel 1:

1300 Teile einer mit Polyvinylalkohol stabilisierten Dispersion auf Basis Vinylacetat, Versaticsäure-10-vinylester und Butylacrylat (45:45:10), Feststoffgehalt: 54,1 %, Viskosität (Haake VT 500, 386,6 s⁻¹): 1150 mPas, Tg: 13°C, Partikelgrößenverteilung: d_{w}: 1863 nm, d_{w}/dₙ: 12,8, Herstellung analog Beispiel 1 der EP-A-0 761 697, werden mit
140 Teilen einer 25 %igen Polyvinylalkohollösung (Viskosität der 4 %igen wässrigen Lösung bei 20°C: 4 mPas, Verseifungsgrad: 88%, Polymerisationsgrad: 630) versetzt.

Zu der Mischung werden folgende Mengen eines Laurinsäuresorbitanesters (®Disponil SML 100N der Fa. Cognis) zugegeben:

| | |
|---|---|
| Beispiel Nr. | Teile Laurinsäuresorbitanester |
| 1a | 0 |
| 1b | 18,5 |
| 1c | 36,9 |
| 1d | 73,8 |

Die Abmischungen werden mit entionisiertem Wasser auf einen Feststoffgehalt von 40 % verdünnt und unter Zugabe eines Antibackmittelgemisches aus Talk und Dolomit sprühgetrocknet (Sprühtrockner der Fa. Niro, Eingangstemperatur: 130°C, Ausgangstemperatur: 65°C, Durchsatz: 1 kg Dispersion/Stunde). Der Antibackmittelgehalt beträgt 15 %.

Die isolierten Dispersionspulver werden in hydraulisch abbindenden Massen eingesetzt und die Wasseraufnahmen wie folgt bestimmt:

Es wird ein Premix hergestellt aus

| | |
|---|---|
| 300 Teilen | Portlandzement CEM 142.5 R |
| 2 Teilen | ®Tylose MH 15002 P6 |
| 200 Teilen | Quarzsand F 31 |
| 368 Teilen | Quarzsand F 34 |
| 100 Teilen | Omyacarb 20 GU |

der in einem Mischer der Fa. Lödige (Typ M5R) 3 Minuten bei 8,5 Skalenteilen homogenisiert wird.

200 - x Teile Premix werden mit x Teilen Dispersionspulver abgemischt und nach Zugabe von 40 Teilen Wasser 15 Sekunden unter einem Lenartrührer (Fa. Vollrath, Typ EWTHV-1) mit hoher Umdrehungszahl gerührt. Man lässt die Masse 5 Minuten reifen und rührt dann nochmals per Hand durch.

Auf eine 2 cm dicke EPS-Platte wird eine Schablone mit den Abmessungen 0,5 x 10 x 20 cm gelegt. Die Masse wird gleichmäßig eingefüllt und glattgezogen. Man lässt über Nacht stehen, schneidet dann den Probekörper aus und dichtet den Rand mit geschmolzenem Paraffin ab. Die abgedichteten Probekörper werden bei 23°C zunächst 3 Tage bei gesättigter Wasserdampfatmosphäre und anschließend 3 Tage bei 50 % relativer Luftfeuchte gelagert.

Danach wird der Probekörper gewogen und anschließend mit der Prüffläche nach unten in ein mit Wasser gefülltes Becken gelegt. Nach 1 bzw. 24 Stunden wird der Probekörper herausgenommen, mit einem Schwammtuch trockengetupft und gewogen. Die Massenzunahme wird auf g/m² umgerechnet.

Die Wasseraufnahmen der unter Einsatz der Pulver 1 a bis 1 d formulierten Mörtelmassen sind in Tabelle 1 zusammengestellt.

Man erkennt eine deutliche Abnahme der Wasseraufnahme mit steigender Menge an Hydrophobierungsmittel (Pulver 1a bis 1 d). Ebenso nimmt die Wasseraufnahme mit zunehmendem Gehalt an eingesetztem Dispersionspulver ab.

**Tabelle 1**

| Beispiel Nr. | x Teile Dispersionspulver | Wasseraufnahme 1 Std. (g/m²) | Wasseraufnahme 24 Std. (g/m²) |
|---|---|---|---|
| 1a (Vergleich) | 1 | 920 | 1015 |
| 1a (Vergleich) | 2 | 961 | 1031 |
| 1a (Vergleich) | 4 | 869 | 977 |
| 1a (Vergleich) | 6 | 452 | 712 |
| 1b | 1 | 842 | 940 |
| 1b | 2 | 606 | 826 |
| 1b | 3 | 351 | 654 |
| 1b | 4 | 216 | 432 |
| 1b | 5 | 118 | 326 |
| 1b | 6 | 112 | 337 |
| 1c | 1 | 758 | 911 |
| 1c | 2 | 382 | 655 |
| 1c | 3 | 200 | 405 |
| 1c | 4 | 112 | 374 |
| 1c | 5 | 106 | 328 |
| 1c | 6 | 93 | 269 |
| 1d | 1 | 474 | 712 |
| 1d | 2 | 215 | 398 |
| 1d | 3 | 143 | 354 |
| 1d | 4 | 108 | 318 |
| 1d | 5 | 107 | 288 |
| 1d | 6 | 73 | 223 |

### Beispiel 2:

Es wird eine Dispersion, wie in Beispiel 1 beschrieben, hergestellt, jedoch wird die Polymerisation in Gegenwart von 2,5 Teilen, bezogen auf das Gesamtgewicht der Monomeren, Laurinsäuresorbitanester durchgeführt.

1300 Teile des unter Einsatz von Laurinsäuresorbitanester hergestellten Polymeren auf Basis Vinylacetat, Versaticsäure-10-vinylester und Butylacrylat (45:45:10) werden mit
140 Teilen einer 25%igen Polyvinylalkohollösung (Viskosität der 4%igen wässrigen Lösung bei 20°C: 4 mPas, Verseifungsgrad: 88%, Polymerisationsgrad: 630) abgemischt.

Die Abmischung wird mit entionisiertem Wasser auf einen Feststoffgehalt von 40 % verdünnt und wie in Beispiel 1 beschrieben sprühgetrocknet.

Das isolierte Dispersionspulver wird, wie in Beispiel 1 beschrieben, in einer hydraulisch abbindenden Masse eingesetzt und die Wasseraufnahme bestimmt:

| | | | |
|---|---|---|---|
| Beispiel Nr. | Teile Dispersionspulver | Wasseraufnahme 1 Std. (g/m²) | Wasseraufnahme 24 Std. (g/m²) |
| 1a (Vergleich) | 6 | 452 | 712 |
| 2 | 6 | 113 | 367 |

Auch hier erkennt man wieder die deutlich reduzierte Wasseraufnahme bei Einsatz des hydrophobierten Pulvers.

### Beispiel 3:

In einer Küchenmaschine werden 50 Teile ®Sipernat 22 (Fällungskieselsäure mit einer Oberfläche nach BET von 190 m²/g, mittlere Größe der Agglomerate 100 µm, 98 % SiO₂) vorgelegt und 50 Teile Laurinsäuresorbitanester innerhalb von 5 Minuten bei Raumtemperatur zugetropft. Rührgeschwindigkeit: Stufe 2, Nach 3 Minuten Nachrühren wird die pulverförmige Mischung abgefüllt.

Es wird eine Mischung aus gleichen Teilen Dispersionspulver 1a und der zuvor beschriebenen pulverförmigen Mischung im Verhältnis 1:1 homogenisiert, von der 4 Teile zu der unter Beispiel 1 beschriebenen hydraulisch abbindenden Massen zugesetzt wird.

Die Wasseraufnahme im Vergleich zu einer nur mit Dispersionspulver modifizierten Masse ist in der nachfolgenden Tabelle zusammengestellt:

| | | | |
|---|---|---|---|
| Beispiel Nr. | Teile Dispersionspulver | Wasseraufnahme 1 Std. (g/m²) | Wasseraufnahme 24 Std. (g/m²) |
| 1a (Vergleich) | 2 | 961 | 1031 |
| 3 | 2 | 107 | 250 |

Vergleichbare Ergebnisse werden erhalten, wenn die pulverförmige Mischung als Antibackmittel während der Versprühung zur Dispersion zugesetzt wird.

## Patentansprüche

1. Verwendung einer Dispersionspulver-Zusammensetzung auf der Basis von wasserunlöslichen Polymerisaten, **dadurch gekennzeichnet, dass** sie, bezogen auf die Gesamtmasse des Polymerisats, 0,1 bis 30 Gew.-% mindestens eines Carbonsäureesters enthält, dessen Alkoholkomponente aus der Gruppe der Polyhydroxyverbindungen stammt, zur Hydrophobierung von Baustoffmassen.

2. Verwendung einer Dispersionspulver-Zusammensetzung gemäß Anspruch 1, **dadurch gekennzeichnet, dass** sie
a) mindestens ein wasserunlösliches Polymerisat aus der Gruppe der Vinylester-, Vinylester/Ethylen-, Vinylchlorid-, (Meth)acrylat-, Styrol/(Meth)acrylat-Homo und/oder Copolymerisate,
b) 3 bis 35 Gew.-%, bezogen auf die Gesamtmasse des Polymerisats, mindestens eines Schutzkolloids,
c) 0,1 bis 30 Gew.-% bezogen auf die Gesamtmasse des Polymerisats, mindestens eines Carbonsäureesters, dessen Alkoholkomponente aus der Gruppe der Polyhydroxyverbindungen stammt, und der zwischen Carbonsäure und Alkoholkomponente zwischen 0 und 80 Polyethylenoxideinheiten aufweist und
d) 0 bis 30 Gew.-%, bezogen auf die Gesamtmasse des Polymerisats, Antibackmittel, enthält.

3. Verwendung einer Dispersionspulver-Zusammensetzung gemäß Anspruch 1 oder 2, **dadurch gekennzeichnet, dass** das Polymerisat zusätzlich mittels Emulgatoren stabilisiert wird.

4. Verwendung einer Dispersionspulver-Zusammensetzung gemäß mindestens einem der vorhergehenden Ansprüche, **dadurch gekennzeichnet, dass** zur Herstellung des Polymerisates als Schutzkolloid Polyvinylalkohol mit einem Polymerisationsgrad von 200 bis 3500 und einem Hydrolysegrad von 80 bis 98 Mol-% eingesetzt wird.

5. Verwendung einer Dispersionspulver-Zusammensetzung gemäß mindestens einem der vorhergehenden Ansprüche, **dadurch gekennzeichnet, dass** die Polyhydroxykomponente des Carbonsäureesters aus der Gruppe der Sorbitane stammt.

6. Verwendung einer Dispersionspulver-Zusammensetzung gemäß Anspruch 5, **dadurch gekennzeichnet, dass** der Carbonsäureester ein Laurinsäuresorbitanester ist.

7. Verwendung einer Dispersionspulver-Zusammensetzung gemäß mindestens einem der Ansprüche 1 bis 4, **dadurch gekennzeichnet, dass** die Polyhydroxykomponente des Carbonsäureesters Glycerin ist.

8. Verwendung einer Dispersionspulver-Zusammensetzung gemäß mindestens einem der vorhergehenden Ansprüche, **dadurch gekennzeichnet, dass** die Säure- und Alkoholkomponente Halogene, Hydroxyl-, Esher-, Thioether-, Ester-, Amid-, Carboxyl-, Sulfonsäure-, Carbonsäureanhydrid- und/oder Carbonylgruppen enthalten.

9. Verwendung einer Dispersionspulver-Zusammensetzung gemäß mindestens einem der vorhergehenden Ansprüche, **dadurch gekennzeichnet, dass** als Carbonsäureester der entsprechende Monoester der Polyhydroxyverbindungen eingesetzt wird.

10. Verwendung einer Dispersionspulver-Zusammensetzung gemäß mindestens einem der vorhergehenden Ansprüche, **dadurch gekennzeichnet, dass** der Carbonsäureester bereits in die Vorlage des zur Herstellung benötigten Polymerisates a) gegeben wird.

11. Verwendung einer Dispersionspulver-Zusammensetzung gemäß mindestens einem der vorhergehenden Ansprüche, **dadurch gekennzeichnet, dass** als Antibackmittel Aluminiumsilikate, Calcium- und Magnesiumcarbonate bzw. deren Gemische, Kieselsäuren und Kombinationen von Dolomit bzw. Calcit und Talk eingesetzt werden.

12. Verwendung einer Dispersionspulver-Zusammensetzung gemäß mindestens einem der vorhergehenden Ansprüche, **dadurch gekennzeichnet, dass** der Carbonsäureester auf ein pulverförmiges Trägermaterial aufgebracht ist, mit der Maßgabe, dass dieses Trägermaterial 10 bis 160 Gew.-% Carbonsäureester, bezogen auf das Gesamtgewicht des Trägermaterials, enthält.

13. Verwendung einer Dispersionspulver-Zusammensetzung gemäß Anspruch 12, **dadurch gekennzeichnet, dass** das pulverförmige Trägermaterial ein Antibackmittel gemäß Anspruch 11 ist.

14. Verwendung einer Dispersionspulver-Zusammensetzung gemäß Anspruch 12, **dadurch gekennzeichnet, dass** als Trägermaterial pyrogen hergestellte Kieselsäure oder gefällte Kieselsäure mit einer BET-Oberfläche von mindestens 50m² /g eingesetzt werden.

15. Verwendung einer Dispersionspulver-Zusammensetzung gemäß mindestens einem der vorhergehenden Ansprüche, **dadurch gekennzeichnet, dass** das Polymerisat mittels Schutzkolloiden stabilisiert ist.

16. Verwendung einer Dispersionspulver-Zusammensetzung gemäß mindestens einem der vorhergehenden Ansprüche, zur Hydrophobierung von bauchemischen Produkten mit anorganischen, hydraulisch abbindenden Bindemitteln.

17. Verwendung einer Dispersionspulver-Zusammensetzung gemäß mindestens einem der vorhergehenden Ansprüche, zur Hydrophobierung von Zement, Gips, Wasserglas, Bauklebern, Putzen, Spachtelmassen, Fußbodenspachtelmassen, Fugenmörtein, Mörtel oder Beton.

## Claims

1. The use of a dispersion powder composition based on water-insoluble polymers and comprising, based on the total weight of the polymer, from 0.1 to 30% by weight of at least one carboxylic ester whose alcohol component derives from the group consisting of the polyhydroxy compounds, for hydrophobicizing construction compositions.

2. The use of a dispersion powder composition as claimed in claim 1, wherein the dispersion powder composition comprises
a) at least one water-insoluble polymer selected from the group consisting of the vinyl ester, vinyl ester-ethylene, vinyl chloride, (meth)acrylate, styrene-(meth)acrylate homo- and/or copolymers,
b) from 3 to 35% by weight, based on the total weight of the polymer, of at least one protective colloid,
c) from 0.1 to 30% by weight, based on the total weight of the polymer, of at least one carboxylic ester whose alcohol component derives from the group consisting of the polyhydroxy compounds and which has between 0 and 80 polyethylene oxide units between carboxylic acid component and alcohol component
d) from 0 to 30% by weight, based on the total weight of the polymer, of anticaking agents.

3. The use of a dispersion powder composition as claimed in claim 1 or 2, wherein the polymer is additionally stabilized by means of emulsifiers.

4. The use of a dispersion powder composition as claimed in at least one of the preceding claims, wherein polyvinyl alcohol with a degree of polymerization of from 200 to 3 500 and a degree of hydrolysis of from 80 to 98 mol% is used as protective colloid for preparing the polymer.

5. The use of a dispersion powder composition as claimed in at least one of the preceding claims, wherein the polyhydroxy component of the carboxylic ester derives from the group consisting of the sorbitans.

6. The use of a dispersion powder composition as claimed in claim 5, wherein the carboxylic ester is a sorbitan ester of lauric acid.

7. The use of a dispersion powder composition as claimed in at least one of claims 1 to 4, wherein the polyhydroxy component of the carboxylic ester is glycerol.

8. The use of a dispersion powder composition as claimed in at least one of the preceding claims, wherein the acid component and the alcohol component contain halogens, hydroxyl groups, ether groups, thioether groups, ester groups, amide groups, carboxy groups, sulfonic acid groups, carboxylic anhydride groups, and/or carbonyl groups.

9. The use of a dispersion powder composition as claimed in at least one of the preceding claims, wherein the carboxylic ester used comprises the appropriate monoester of the polyhydroxy compounds.

10. The use of a dispersion powder composition as claimed in at least one of the preceding claims, wherein the carboxylic ester is added to the initial charge for the polymer a) needed for the preparation process.

11. The use of a dispersion powder composition as claimed in at least one of the preceding claims, wherein aluminum silicate, calcium carbonate or magnesium carbonate or mixtures of these, silicas, or combinations of dolomite and, respectively, calcite and talc are used as anticaking agents.

12. The use of a dispersion powder composition as claimed in at least one of the preceding claims, wherein the carboxylic acid has been applied to a pulverulent carrier material, with the proviso that this carrier material comprises from 10 to 160% by weight of carboxylic ester, based on the total weight of the carrier material.

13. The use of a dispersion powder composition as claimed in claim 12, wherein the pulverulent carrier material is an anticaking agent as claimed in claim 11.

14. The use of a dispersion powder composition as claimed in claim 12, wherein the carrier material used comprises fumed silica or precipitated silica with a BET surface area of at least 50 m²/g.

15. The use of a dispersion powder composition as claimed in at least one of the preceding claims, wherein the polymer is stabilized by means of protective colloids.

16. The use of a dispersion powder composition as claimed in at least one of the preceding claims, for hydrophobicizing construction-chemistry products with inorganic, hydraulically setting binders.

17. The use of a dispersion powder composition as claimed in at least one of the preceding claims, for hydrophobicizing cement, gypsum plaster, water glass, construction adhesives, renders, troweling compositions, floor-filling compositions, jointing mortars and other types of mortar, or concrete.

## Revendications

1. Utilisation d'une composition de poudre en dispersion à base de polymères insolubles dans l'eau, **caractérisée en ce que**, par rapport à la quantité totale du polymère, elle contient 0,1 à 30 % en poids d'au moins un ester d'un acide carboxylique dont le composant alcool provient du groupe des composés polyhydroxylés, pour hydrophobiser des masses pour matériaux de construction.

2. Utilisation d'une composition de poudre en dispersion selon la revendication 1, **caractérisée en ce qu'**elle contient :
a) au moins un polymère insoluble dans l'eau du groupe des homo- et/ou copolymères des esters vinyliques, esters vinyliques/éthylène, du chlorure de vinyle, de (méth)acrylate, styrène/(méth)acrylate,
b) 3 à 35 % en poids, par rapport au poids total du polymère, d'au moins un colloïde protecteur,
c) 0,1 à 30 % en poids, par rapport au poids total du polymère, d'au moins un ester d'acide carboxylique dont le composant alcool provient du groupe des composés polyhydroxylés, et qui entre l'acide carboxylique et le composant alcool comprend de 0 à 80 motifs poly(oxyde d'éthylène), et
d) 0 à 30 % en poids, par rapport au poids total du polymère, d'un anti-agglomérant.

3. Utilisation d'une composition de poudre en dispersion selon la revendication 1 ou 2, **caractérisée en ce que** le polymère est en outre stabilisé par des émulsifiants.

4. Utilisation d'une composition de poudre en dispersion selon au moins l'une des revendications précédentes, **caractérisée en ce que**, pour préparer le polymère, on utilise en tant que colloïde protecteur un poly(alcool vinylique) présentant un degré de polymérisation de 200 à 3500 et un degré d'hydrolyse de 80 à 98 % en moles.

5. Utilisation d'une composition de poudre en dispersion selon au moins l'une des revendications précédentes, **caractérisée en ce que** le composant polyhydroxylé de l'ester d'acide carboxylique est choisi dans le groupe des sorbitans.

6. Utilisation d'une composition de poudre en dispersion selon la revendication 5, **caractérisée en ce que** l'ester d'acide carboxylique est un ester de l'acide laurique du sorbitan.

7. Utilisation d'une composition de poudre en dispersion selon au moins l'une des revendications 1 à 4, **caractérisée en ce que** le composant polyhydroxylé de l'ester d'acide carboxylique est le glycérol.

8. Utilisation d'une composition de poudre en dispersion selon au moins l'une des revendications précédentes, **caractérisée en ce que** le composant acide et le composant alcool contiennent des halogènes, des groupes hydroxyle, éther, thioéther, ester, amide, carboxyle, acide sulfonique, anhydride carboxylique et/ou carbonyle.

9. Utilisation d'une composition de poudre en dispersion selon au moins l'une des revendications précédentes, **caractérisée en ce qu'**on utilise en tant qu'ester d'acide carboxylique le monoester correspondant des composés polyhydroxylés.

10. Utilisation d'une composition de poudre en dispersion selon au moins l'une des revendications précédentes, **caractérisée en ce que** l'ester d'acide carboxylique se trouve déjà dans la masse en place du polymère a) nécessaire à la préparation.

11. Utilisation d'une composition de poudre en dispersion selon au moins l'une des revendications précédentes, **caractérisée en ce qu'**on utilise en tant qu'agent anti-agglomérant des silicates d'aluminium, des carbonates de calcium et de magnésium ou leurs mélanges, des silices, et des combinaisons de dolomite ou de calcite et de talc.

12. Utilisation d'une composition de poudre en dispersion selon au moins l'une des revendications précédentes, **caractérisée en ce que** l'ester d'acide carboxylique est appliqué sous forme d'un matériau support pulvérulent, du moment que ce matériau support contient 10 à 160 % en poids de l'ester d'acide carboxylique par rapport au poids total du matériau support.

13. Utilisation d'une composition de poudre en dispersion selon la revendication 12, **caractérisée en ce que** le matériau support pulvérulent est un agent anti-agglomérant selon la revendication 11.

14. Utilisation d'une composition de poudre en dispersion selon la revendication 12, **caractérisée en ce qu'**on utilise en tant que matériau support une silice préparée dans des conditions pyrogènes ou une silice précipitée ayant une aire BET d'au moins 50 m²/g.

15. Utilisation d'une composition de poudre en dispersion selon au moins l'une des revendications précédentes, **caractérisée en ce que** le polymère est stabilisé à l'aide de colloïdes protecteurs.

16. Utilisation d'une composition de poudre en dispersion selon au moins l'une des revendications précédentes, pour hydrophobiser des produits en chimie des matériaux de construction comportant des liants inorganiques à prise hydraulique.

17. Utilisation d'une composition de poudre en dispersion selon au moins l'une des revendications précédentes pour hydrophobiser du ciment, du plâtre, du verre soluble, des adhésifs pour la construction, des enduits, des masses de rebouchage, des masses de rebouchage pour plancher, des mortiers de jointoyage, du mortier ou du béton.
